# EUROPEAN PATENT SPECIFICATION

(11) **EP 0 160 080 B1**
(45) Date of publication and mention of the grant of the patent: **20.01.1993**
(21) Application number: 84904055.5
(22) Date of filing: 01.11.1984
(51) Int. Cl.: C05G 3/04, C09K 17/00

(54) **METHOD FOR DESALINATION AND REHABILITATION OF IRRIGATED SOIL**
VERFAHREN ZUR ENTSALZUNG UND WIEDERHERSTELLUNG BERIESELTEN BODENS
PROCEDE DE DESSALAGE ET D'ASSAINISSEMENT DE SOLS IRRIGUES

(30) Priority: 02.11.1983 US 547866
(43) Date of publication of application: 06.11.1985
(73) Proprietor: SOTAC CORPORATION, El Centro, California 92244 (US)
(72) Inventor: Sylling, Truman V., Bonita, California 92002 (US); Allen, Stephen L., National City, CA 92050 (US)
(74) Representative: Spall, Christopher John
(86) International application number: US8401756
(87) International publication number: WO8501938

(56) References cited:
- US-A- 2 751 368
- US-A- 3 029 140
- US-A- 3 091 522
- US-A- 3 958 972
- US-A- 4 098 814
- US-A- 4 396 412

## Description

### BACKGROUND OF THE INVENTION

This invention relates generally to soil conditioning and particularly pertains to a method for desalination and rehabilitation of irrigated soil.

Irrigated soil typically accumulates salts and alkalis that inhibit crop growth so that it becomes advantageous to remove the salts and alkalis to enhance crop yield.

Known techniques for removing salts and alkalis from soil are often expensive and relatively ineffective. One such technique termed "leaching" involves applying large amounts of water to saturate the soil and dissolve the salts and alkalis so that they leach down to the drainage tile and rise to the surface of the soil where they can be flushed away. Another technique known as "chiseling" involves raking the soil to cut deep furrows in order to break the hardpan underneath the soil to enhance the percolation rate so that water will not be left standing on the soil to evaporate and leave dissolved minerals behind. Yet another technique previously employed involves diluting lime-sulphur in irrigation water and applying the solution to the soil at a metered rate.

Such techniques suffer certain drawbacks. In addition to being relatively expensive and ineffective, the leaching technique tends to wash off fertilizers as well as percolating off the undesired salts and alkalis. Furthermore, it tends to cause the soil to settle and pack together so that the soil needs to be reworked after the leaching. The chiseling technique not only requires the expense of a big chisel plow with a large tractor and the manpower and fuel involved, but it also is of a relatively short-term benefit and relatively ineffective to dissolve and remove salts and alkalis already existing in the soil.

Lime-sulphur applications, in addition to being relatively expensive and ineffective, involve the difficulty of dissolving the sulphur in the irrigation water.

From US 2 751 368 it is known to add polyacrylate salts, particularly those derived by hydrolysis or saponification of polyacrylonitrile, to soil to improve the properties of the soil, particularly for the purpose of conditioning or improving the structure of the soil by aggregating it with pellets with a particle size of approximately 4.2 to 12.7 mm. This improves the tilth, aeration, porosity, water absorption and holding capacity of the soil. However such salts are not suggested to help in removing salt from the soil, and require large quantities of the soil conditioner to be used (100-400 lbs/ac; 112-448 kg/ha).

It is therefore desirable to have a method for desalination and reclamation of irrigated soil which is relatively inexpensive, easy to perform, and effective to remove the salts/or alkalis in order to enhance crop yield.

### SUMMARY OF THE INVENTION

It is the primary object of the present invention to provide an improved method for desalination and reclamation of irrigated soil.

In accordance with a first aspect of the present invention, a process for reducing harmful effects of salts and/or alkaline deposits in irrigated soils by adding non-nutrient chemical agents to the soil that combine with said deposits includes applying to the soil an aqueous solution of at least one anionic compound having threshold properties and/or a substantially neutral water soluble salt of said compound in which the anionic compound or salt is applied in a quantity of from about 0.1 pound to about 10 pounds per acre (0.1 kg to 11.2 kg per hectare) of land applied directly to the soil prior to irrigation or by incorporation into irrigation water applied to the soil over a period of from about 4 to 96 hours, in which said anionic compound comprises at least one anionic polymeric carboxylic acid or its neutral water soluble salt.

According to a second aspect the invention comprises the use of an anionic polymeric carboxylic acid compound having threshold properties, and/or a substantially neutral water soluble salt thereof and/or an anhydride thereof to treat irrigated soil, said anionic compound or salt being applied in a quantity of from 0.1 to 10 lbs. per acre (0.1kg to 11.2kg per hectare).

### DETAILED DESCRIPTION

I have found that certain anionic materials or their substantially neutral water soluble salts applied to a soil in minute amounts are effective to reduce the harmful effects of salts and/or alkalis which had accumulated in the soil from irrigation water. Thus soil in which such salts and/or alkalis have reached the concentration that whitish deposits appeared on its surface and on which crop growth was unacceptably low is restored to useful fertility level through the action of these materials.

The amount of active material(s) required per unit area will depend on the extent to which salts and/or alkalis have accumulated, but the amount is not in stoichiometric relation to the salt and/or alkali concentration in the soil. No exact figures can be given since the nature of the soil also affects the amount of active material(s) required, but, for moderate salt and/or alkali accumulation, useful effects have been obtained by application of from 0.1 pound to 5.0 pounds per acre (0.1-16.8 kg/ha) over a 4- to 48-hour period, while for heavy accumulation, from 1.0 to 10.0 pounds per acre (1.1-28.0 kg/ha) over a 12- to 96-hour period may be needed. The material(s) is/are preferably applied in a plurality of spaced treatments to insure improvement of the soil in depth, and the treatments may continue in extreme cases until the soil is fully saturated.

Anionic materials having threshold activity suitable for use in the present soil treatment process include low molecular weight, water miscible synthetic polymers containing free carboxyl groups, organophosphorus acids, and substantially neutral salts of these. Threshold activity refers to sub-stoichiometric chemical processes of which dispersancy and calcium carbonate stabilization are important factors. As described in Journal Of The Cooling Tower Institute, Vol. 3, No. 1, Winter 1982, page 17 et seq., in the article of Leonard Dubin entitled "The Effect of Organophosphorus Compounds And Polymers on CaCO₃ Crystal Morphology," calcium carbonate stabilization is understood to involve an increase in average particle size and a change in the gross shape of calcium carbonate crystals, and dispersancy involves surface charge effects.

Anionic polymeric materials for use in the present process include polymers, copolymers and sulfonated polymers and copolymers of acrylic acid, methacrylic acid, hydrolyzed polymaleic anhydride and substantially neutral water-soluble salts of these. The commercially available material known as "Belclene 200", a product of Ciba-Geigy Corporation, of Ardsley, New York, which is understood to be a water-soluble hydrolyzed maleic anhydride polymer having a low molecular weight, e.g. from 300 to 5000, or salt or such polymer, has been found particularly useful (see U.S. Patent No. 3,963,636).

These acids and/or salts may be used alone or in combination of two or more.

These materials can be used for the following methods of irrigation: border, basin, controlled flooding, corrugation, furrow, sprinkler, subirrigation, and drip.

The chemicals are diluted and proportioned with the flow of irrigation water to provide the desired dosage of material over a predetermined time and size of field to provide uniform coverage. Typical dosages fall between 0.5 and 4.0 pounds per acre (0.56-4.48 kg/ha). The compounds may be fed, depending upon the type of irrigation, using a chemical metering pump, passive drip, or holding tank and metering box.

These materials disperse and improve the solubility of mineral salts present in the irrigation water and already in the soil through stabilization and crystal distortion mechanisms and through dispersancy. This forces the mineral salts deep into the soil where they are eventually discharged through the field tile drains, resulting in an improved percolation rate, reduction of soil salinity and pH, and increased germination and yield.

It is to be understood that this proposed mechanism is advanced only as a possible assistance in understanding the invention and that patentability is based on the novelty and utility of the process and not on the correctness of the mechanism proposed.

The following examples are given to aid in understanding the invention, but it is to be understood that the invention is not limited to the particular procedures, conditions or materials of the examples. In each case there was noted an increase in the percent of seeds germinated as well as an increase in the rate of germination, that is the seed began to grow more rapidly and in greater numbers. Also, there was noted an improvement in the percolation of the soil as evidenced by a marked increase in salinity and flow of water through drain tile. Furthermore, there was a very evident removal of encrusted salt on the soil surface. Each example is representative of other experimental treatments performed on Imperial Valley agricultural land in Imperial County, California.

### EXAMPLE I

A 35-acre (14 ha) sugar beet field in Imperial Valley was noticed to have 50% to 60% germination prior to treatment. It was watered twice using the method of the instant invention with 2-1/4 pounds of Belclene 200 per acre (2.52 kg/ha), each watering being about 24 hours in duration and spaced about five weeks apart. The first watering was a sprinkler irrigation to germinate the seed, and the second was flood irrigation. The typical results described above were noted following the treatment with as much as 90% to 95% germination. The adjacent field, which was watered at the same rate and manner but without treatment, was used for comparison purposes, and where it used to provide a yield more than double the production of the field that was treated, the productivity of both fields are now about equal.

### EXAMPLE II

200 acres (81 ha) of a brand new field of alfalfa in imperial valley was watered twice, the first being a sprinkler irrigation before seeding at about 3 pounds per acre (3.36 kg/ha), and the second being flood irrigation about six weeks later at about 1-3/4 pounds of Belclene 200 per acre (1.96 kg/ha) with the same typical results described above in comparison to an adjacent field which was watered at the same time.

### EXAMPLE III

42 acres (17.2 ha) of asparagus were watered six times at about ten-day intervals using about 1 pound of Belclene 200 per acre (1.12 kg/ha) during each watering. The soil texture was visually improved, it having a better agglomeration as opposed to the much larger particle size in the adjacent field. Plants were greener after the treatment and much more vigorous in appearance in comparison to those on the adjacent field which even appeared brown in color.

### EXAMPLE IV

A 10-acre (4ha) spinach field was flood irrigated just after seeding with 2 pounds of Belclene 200 per acre (2.24 kg/ha) Germination was noticeably accelerated compared to an adjacent untreated field that was watered at the same time, and the germination period was only 50% to 60% of the normal time previously experienced before treatment.

### EXAMPLE V

30 acres (16 ha) of bermuda grass was flood irrigated twice for 12 hours with about three weeks between waterings. 1 pound of Belclene 200 per acre (1.12 kg/ha) was used in each watering, and now the bermuda grass is growing in soil that previously did not grow any bermuda grass.

## Claims

1. A process for reducing harmful effects of salts and/or alkaline deposits in irrigated soils by adding non-nutrient chemical agents to the soil that combine with said deposits, which includes applying to the soil an aqueous solution of at least one anionic compound having threshold properties and/or a substantially neutral water soluble salt of said compound in which the anionic compound or salt is applied in a quantity of from about 0.1 pound to about 10 pounds per acre (0.1 kg to 11.2 kg per hectare) of land applied directly to the soil prior to irrigation or by incorporation into irrigation water applied to the soil over a period of from about 4 to 96 hours, in which said anionic compound comprises at least one anionic polymeric carboxylic acid or its neutral water soluble salt.

2. A process as recited in claim 1 in which said anionic compound comprises at least one member of the group consisting of polymers, copolymers and sulfonated polymers and copolymers of acrylic acid and methacrylic acid, and substantially neutral water soluble salts of these.

3. A process as recited in claim 2 in which said aqueous solution adds to the irrigation water and/or provides a soil water concentration from about 0.1 to about 100 ppm of hydrolyzed polymaleic anhydride having a molecular weight of from about 300 to 5000 or its substantially neutral water soluble salt.

4. A process as recited in claim 1 in which said anionic compound comprises an hydrolyzed polymaleic anhydride.

5. Use of an anionic polymeric carboxylic acid compound having threshold properties, and/or a substantially neutral water soluble salt thereof and/or an anhydride thereof to treat irrigated soil, said anionic compound or salt being applied in a quantity of from 0.1 to 10 lbs. per acre (0.1kg to 11.2kg per hectare).

6. Use as claimed in claim 10, said anionic compound, salt thereof and/or anhydride thereof is applied directly to the soil prior to irrigation or by incorporation into irrigation water applied to the soil over a period of from about 4 to 96 hours.

7. Use as claimed in claim 10 or 11 wherein the polymeric compound is polymaleic anhydride having a molecular weight of from 300 to 5000.

## Patentansprüche

1. Verfahren zur Verminderung schädlicher Wirkungen von Salzen und/oder alkalischen Ablagerungen in bewässerten Böden, indem nährsalzfreie chemische Wirkstoffe, die sich mit den Ablagerungen verbinden, dem Boden zugeführt werden, welches beinhaltet, daß dem Boden eine wassrige Lösung mit wenigstens einer anionischen Verbindung mit Schwellenwerteigenschaften und/oder ein im wesentlichen in neutralem Wasser löstiches Salz dieser Verbindung zugeführt wird, wobei die anionische Verbindung oder das Salz in einer Menge von etwa 0,1 bis etwa 10 pound/acre (0,1 bis 11,2 kg/ha) Land angewendet wird, welche über einen Zeitraum von etwa 4 bis 96 Stunden vor der Bewässerung direkt auf den Boden aufgebracht wird oder in das auf den Boden aufgebrachte Bewässerungswasser eingebracht wird, wobei die anionische Verbindung wenigstens eine anionische polymere Karbonsäure oder deren in neutralem Wasser lösliches Salz enthält.

2. Verfahren nach Anspruch 1, wobei die anionische Verbindung wenigstens einen Bestandteil aus der Gruppe aus Polymeren, Kopolymeren und sulfonierten Polymeren und Kopolymeren von Akrylsäure und Methakrylsäure und deren im wesentlichen in neutralem Wasser löslichen Salzen enthält.

3. Verfahren nach Anspruch 2, wobei die wässrige Lösung zu dem Bewässerungswasser hinzukommt und/oder eine Bodenwasserkonzentration von etwa 0,1 bis etwa 100 ppm hydrolysiertes Polymaleinanhydrid mit einem Molekulargewicht von etwa 300 bis 5000 oder dessen im wesentlichen in neutralem Wasser lösliches Salz erbringt.

4. Verfahren nach Anspruch 1, wobei die anionische Verbindung ein hydrolysiertes Polymaleinanhydrid enthält.

5. Verwendung einer anionischen polymeren Karbonsäureverbindung mit Schwellenwerteigenschaften und/oder eines ihrer im wesentlichen in neutralem Wasser löslichen Salze und/oder eines ihrer Anhydride zur Behandlung von bewässertem Boden, wobei die anionische Verbindung oder das Salz in einer Menge von 0,1 bis 10 lbs./acre (0,1 kg bis 11,2 kg/ha) verwendet wird.

6. Verwendung nach Anspruch 10, wobei über einen Zeitraum von etwa 4 bis 96 Stunden die anionische Verbindung, deren Salz und/oder deren Anhydrid vor der Bewässerung direkt auf den Boden aufgebracht wird oder in das auf den Boden aufgebrachte Bewässerungswasser eingebracht wird.

7. Verwendung nach Anspruch 10 oder 11, wobei die polymere Verbindung ein Polymaleinanhydrid mit einem Molekulargewicht von 300 bis 5000 ist.

## Revendications

1. Procédé de réduction des effets nuisibles de sels et/ou de dépôts alcalins dans les sols irrigués en ajoutant des agents chimiques non nutritifs au sol, lesquels se combinent avec lesdits dépôts, comprenant l'application au sol d'une solution aqueuse d'au moins un composé anionique ayant des propriétés de seuil et/ou un sel soluble dans l'eau pratiquement neutre dudit composé dans lequel le composé anionique ou sel est appliqué en une quantité allant d'environ 0,1 livre à environ 10 livres par acre (0,1 kg à 11,2 kg par hectare) de terre appliqué directement au sol avant irrigation ou par incorporation dans l'eau d'irrigation appliquée au sol sur une période allant environ de 4 à 96 heures, dans lequel ledit composé anionique comprend au moins un acide carboxylique polymérique anionique ou son sel neutre soluble dans l'eau.

2. Procédé tel que défini dans la revendication 1, dans lequel ledit composé anionique comprend au moins un membre d'un groupe comprenant les polymères, les copolymères et les polymères et les copolymères sulfonatés de l'acide acrylique et de l'acide méthacrylique, et leurs sels solubles dans l'eau, pratiquement neutres.

3. Procédé tel que défini dans la revendication 2, dans lequel ladite solution aqueuse s'ajoute à l'eau d'irrigation et/ou fournit une concentration d'eau du sol allant d'environ 0,1 à environ 100 ppm d'anhydride polymaléique hydrolysé ayant un poids moléculaire allant d'environ 300 à 5000 ou son sel soluble dans l'eau pratiquement neutre.

4. Procédé tel que défini dans la revendication 1, dans lequel le composé anionique comprend un anhydride polymaléique hydrolysé.

5. Utilisation d'un composé d'acide carboxylique polymérique anionique ayant des propriétés de seuil, et/ou un sel soluble dans l'eau, pratiquement neutre, de celui-ci, et/ou un anhydride de celui-ci pour traiter un sol irrigué, ledit composé anionique ou ledit sel étant appliqué en quantité allant de 0,1 à 10 livres par acre (0,1 à 11,2 kg par hectare).

6. Utilisation telle que définie dans la revendication 5, dans laquelle le composé anionique, son sel et/ou son anhydride sont appliqués directement au sol avant l'irrigation ou par incorporation dans l'eau d'irrigation appliquée au sol sur une période allant d'environ 4 à 96 heures.

7. Utilisation telle que définie dans la revendication 5 ou 6, dans laquelle le composé polymérique est de l'anhydride polymaléique ayant un poids moléculaire allant de 300 à 5000.
